**Europäisches Patentamt**

**European Patent Office**

**Office européen des brevets**

(19)

(11) Numéro de publication: **0 248 303**
**B1**

(12) # FASCICULE DE BREVET EUROPEEN

(45) Date de publication du fascicule du brevet:
01.08.90

(51) Int. Cl.⁵: **E05F 15/10**

(21) Numéro de dépôt: **87107550.3**

(22) Date de dépôt: **23.05.87**

(54) **Dispositif d'actionnement électromécanique pour porte à déplacement coulissant.**

(30) Priorité: **04.06.86 FR 8608059**

(43) Date de publication de la demande:
**09.12.87 Bulletin 87/50**

(45) Mention de la délivrance du brevet:
**01.08.90 Bulletin 90/31**

(84) Etats contractants désignés:
**AT CH DE ES GB IT LI NL SE**

(56) Documents cités:
**EP-A- 0 074 922**
**DE-A- 2 106 933**
**FR-A- 2 182 440**
**FR-A- 2 417 620**
**US-A- 3 202 008**

(73) Titulaire: **SOMFY, 8, rue de Margencel,**
**F-74300 Cluses(FR)**

(72) Inventeur: **Rousselot, André, l'Oree du Bois,**
**F-74300 Scionzier(FR)**
Inventeur: **Charnay, Georges, 5, Rue Emile Favre,**
**F-74300 Cluses(FR)**

(74) Mandataire: **Meylan, Robert Maurice et al, c/o BUGNION**
**S.A. 10, route de Florissant Case Postale 375,**
**CH-1211 Genève 12 - Champel(CH)**

ACTORUM AG

## Description

La présente invention concerne un dispositif d'actionnement électromécanique pour porte à déplacement coulissant comprenant un moteur entraînant une vis sans fin sur laquelle est monté un écrou relié à la porte à déplacer et retenu en rotation par une glissière présentant un décrochement à l'entroit correspondant à la fin de la course de la porte, ce décrochement autorisant une certaine rotation de l'écrou et constituant une butée empêchant le déplacement en arrière de l'écrou lorsqu'on agit sur lui par l'intermédiaire de la porte.

Un tel dispositif est connu du brevet FR 2 417 620. Le décrochement de la glissière a pour effet de verrouiller la porte dans sa position fermée. La partie de l'acrou coopérant avec la glissière, en l'occurrence un galet, quitte la glissière lorsqu'il arrive à la hauteur du décrochement pour venir buter radialement contre une surface parallèle à la vis sur laquelle il roule jusqu'à qu'il arrive contre une butée de fin de course. La vis sans fin est alors bloquée en rotation et le moteur est arrêté par des moyens de détection du verrouillage de la porte, moyens qui peuvent être constitués par un interrupteur associé à la butée de fin de course et actionné par le galet. Ce galet se trouve en outre en face d'une paroi dirigée radialement par rapport à la vis sans fin, de telle sorte que toute tentative d'ouvrir la porte en agissant directement sur celle-ci est neutralisée par la paroi radiale contre laquelle vient buter le galet, de sorte que la porte est effectivement verrouillée.

Un tel dispositif de verrouillage donne entièrement satisfaction lorsque les portes à commander sont légères et à faible déplacement. Pour ces portes, la vis sans fin est relativement courte par rapport à son diamètre et les moteurs d'entraînement sont de puissance modeste. Par contre, lorsqu'il s'agit d'entraîner des portes relativement lourdes et à grand déplacement, telles que des portes de garages à basculement, ou des portails, il est nécessaire d'avoir une vis sans fin relativement longue et un moteur développant un couple important. Dans le case du dispositif connu, le moteur et son réducteur continuent à tourner un bref instant une fois que le galet est arrivé en butée contre la butée de fin de course, en raison de l'inertie du moteur et du dispositif de commande de son arrêt. Cette rotation provoque une torsion élastique de la vis sans fin qui se trouve ainsi armée à la manière d'un ressort. Une fois le moteur arrêté, la vis sans fin se désarme en entraînant le réducteur avec un couple sensiblement égal au couple délivré par l'ensemble moteur et réducteur. Le moteur est par conséquent entraîné en sens inverse, particulièrement violemment en raison de l'effet multiplicateur du réducteur travaillant en sens inverse. L'inertie acquise par le moteur électrique provoque à son tour l'entraînement de la vis sans fin d'un angle supérieur à celui de sa torsion et l'acrou, entraîné par la vis, quitte sa position de verrouillage, de telle sorte que le dispositif de verrouillage devient inopérant.

La présente invention a pour but de remédier à cet inconvénient, c'est-à-dire d'assurer un verrouillage en toute circonstance, quels que soient la course et le couple utile du motoréducteur.

A cet effet, le dispositif d'actionnement linéaire selon l'invention est caractérisé en ce que l'écrou est essentiellement constitué de deux parties solidaires axialement l'une de l'autre, montées rotativement l'une autour de l'autre et conformées de manière à assurer leur solidarisation mutuelle en rotation avec un important jeu angulaire, la partie extérieure de la deuxième partie de l'écrou coopérant avec la glissière.

Grâce à la réalisation de l'écrou en deux parties et au jeu angularie entre ces deux parties, la vis sans fin a la possibilité, en fin de course et à l'arrêt du moteur, d'effectuer une brusque rotation en sens inverse sans entraîner la partie extérieure de l'écrou engagée dans le décrochement de la glissière.

La solidarisation en rotation des deux parties de l'écrou peut se faire simplement par l'intermédiaire de saillies axiales en forme de segment de couronne de cercle.

L'invention sera exposée plus en détail au moyen d'exemples d'exécution décrits ci-après en relation avec le dessin annexé dans lequel:

La figure 1 est une vue schématique, en coupe longitudinale, d'un dispositif d'actionnement linéaire électromécanique;

La figure 2 est un détail de la figure 1 montrant l'écrou avant d'arriver en fin de course;

La figure 3 est une vue analogue à la figure 2 montrant l'écrou arrivé en fin de course;

La figure 4 est une vue en coupe selon IV-IV de la figure 2;

La figure 5 est une vue en coupe selon V-V de la figure 3;

La figure 6 est une vue en coupe selon V-V de la figure 3 montrant la vis sans fin entraînée en sens inverse;

La figure 7 est une vue de détail de l'écrou selon une première forme d'exécution et en coupe selon VII-VII de la figure 8;

La figure 8 est une vue en coupe selon VIII-VIII de la figure 7;

La figure 9 est une vue de détail de l'écrou selon une deuxième forme d'exécution et en coupe selon IX-IX de la figure 10;

La figure 10 est une vue en coupe selon X-X de la figure 9.

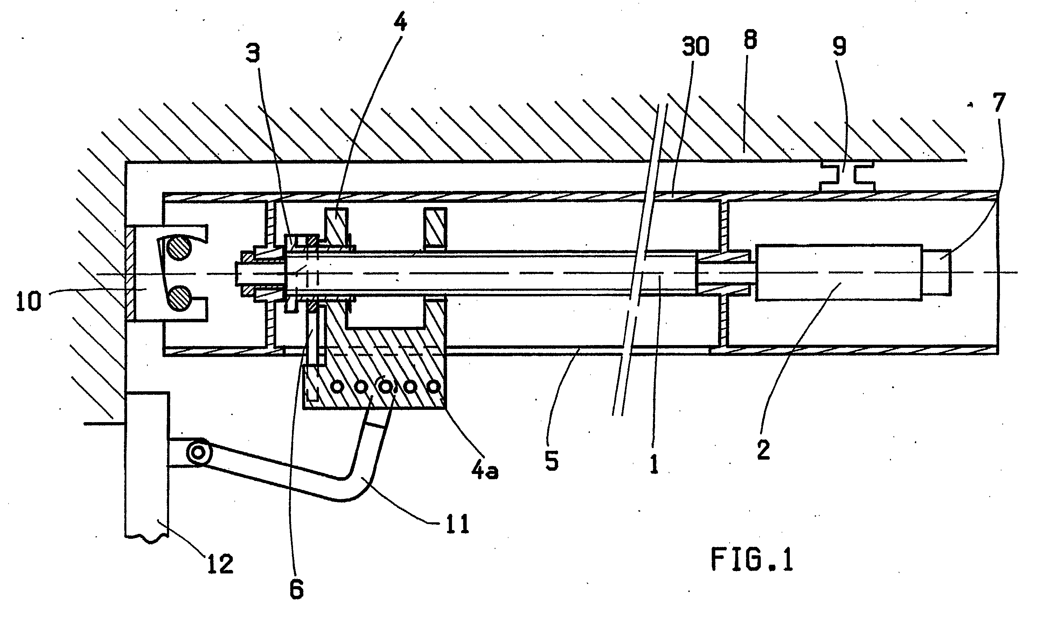

Le dispositif d'actionnement linéaire représenté à la figure 1 comprend essentiellement une vis sans fin 1 monté dans un bâti tubulaire 30 et entraînée par un ensemble moteur électrique-réducteur 2 et sur laquelle est monté un écrou 3 solidaire d'un chariot 4 dont la partie inférieure étroite 4a traverse le bâti 30 à travers une fente longitudinale 5 servant simultanément de glissière pour un doigt 6 solidaire de l'écrou 3. L'arrêt du moteur 2 est assuré automatiquement par un dispositif d'arrêt 7 lorsque le chariot 4 arrive en fin de course. Ce dispositif d'arrêt 7 est du type centrifuge, associé au moteur, et constitue simultanément un interrupteur de sécurité destiné à arrêter le moteur au cas où la porte basculante ou le portail rencontrerait un obstacle. Dans l'exemple représenté, le bâti 30 est fixé d'une part au plafond 8 d'un garage par une pièce de suspension 9 et d'autre part à la paroi avant du garage par un support 10. Le chariot 4 est relié par une bielle 11 à une porte basculante et coulissante 12.

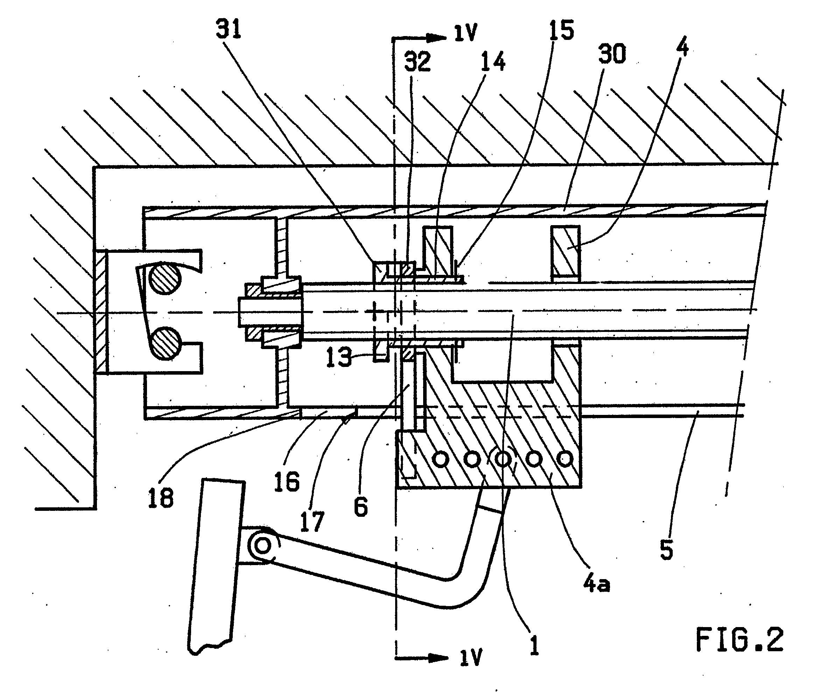

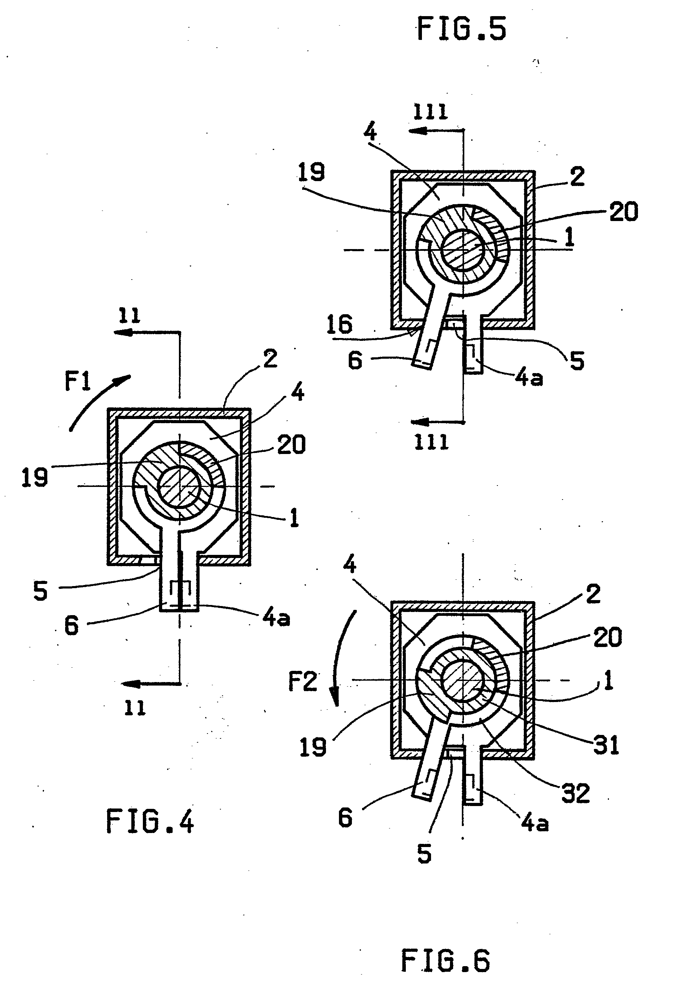

Comme ceci ressort de la figure 2, l'écrou 3 est constitué de deux parties 31 et 32. La première partie 31 est constituée d'un flasque 13 et d'un manchon fileté 14 traversant une partie du chariot 4 et retenu axialement sur ce chariot par un circlips 15. La seconde partie 32 est montée rotativement autour du manchon 14 de la première partie, entre le chariot 4 et le flasque 13 de la première partie, de telle sorte qu'elle est solidaire en translation de la première partie 31. Les parties 31 et 32 de l'écrou sont en outre également solidaires en rotation avec toutefois un jeu angulaire important comme ceci sera décrit plus loin. La partie 32 porte le doigt 6 qui se déplace dans la glissière 5 en empêchant la partie 32 de l'écrou de tourner. Le doigt 6 vient en outre s'appuyer contre un prolongement de la nervure 4a du chariot 4. La fente constituant la glissière 5 présente une largeur approximativement égale à la largeur totale du doigt 6 et de la nervure 4a (figure 4). A l'endroit correspondant à la fin de la course de l'écrou 3, la fente 5 présente un décrochement formé par un élargissement brusque 16 de telle sorte que la glissière 5 présente à cet endroit un coude 17 de 90°. La fente longitudinale du bâti 2 formant la glissière 5 s'arrête en 18, cette extrémité 18 constituant une butée de fin de course pour le doigt 6, c'est-à-dire pour l'écrou 3. La vis sans fin 1 est montée entre deux paliers.

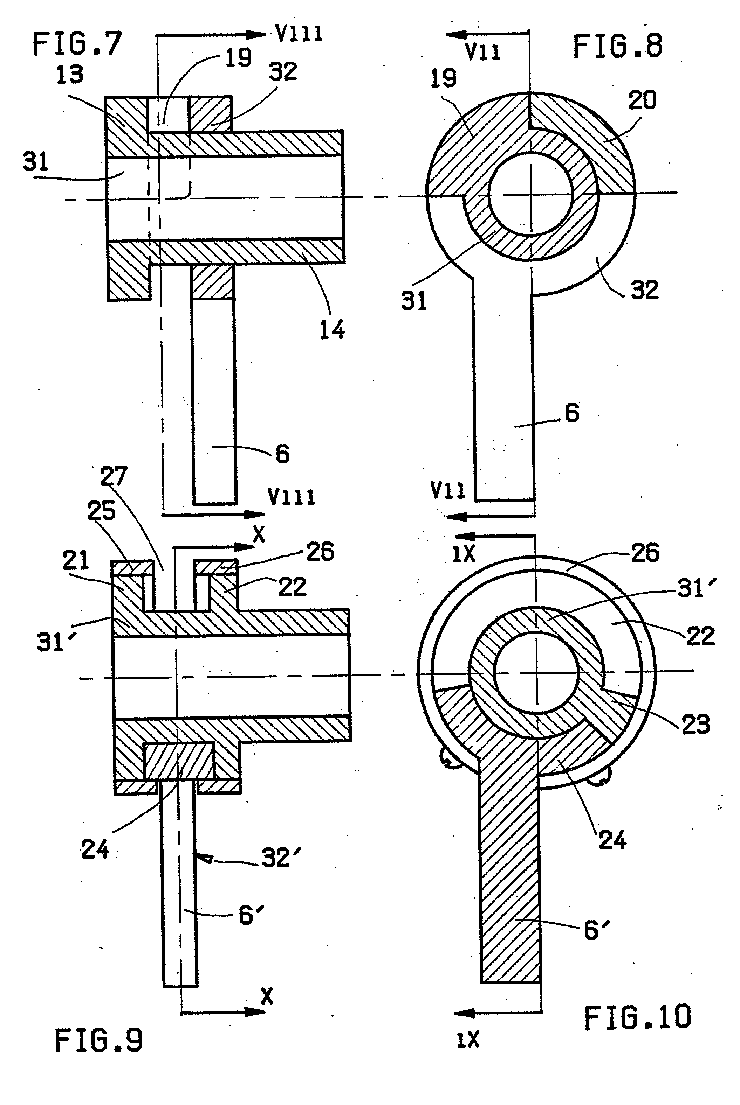

L'écrou sera maintenant décrit en détail au moyen des figures 7 et 8. Le flasque 13 de la première partie 31 de l'écrou présente une partie saillante axiale 19 s'étendant sur environ un quart de cercle en direction de la seconde partie 32 de l'écrou, tandis que cette seconde partie présente une partie saillante axiale 20 en direction du flasque 13 de la première partie s'étendant sur environ un quart de cercle. Les parties 19 et 20 sont coplanaires de telle sorte qu'elles assurent un entraînement mutuel des deux parties 31 et 32 de l'écrou avec un jeu angulaire d'environ 180°.

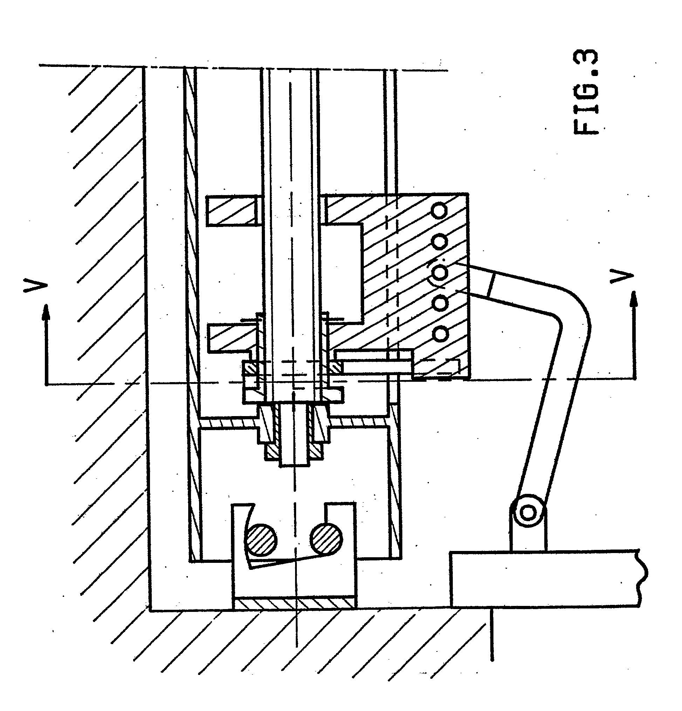

Le fonctionnement du dispositif sera décrit maintenant en relation avec les figures 2 à 6. L'écrou 3 et le chariot 4 en position intermédiaire sont représentés à la figure 2. Dans cette position, la vis sans fin 1 tourne dans le sens de la flèche F1 (figure 4). Elle entraîne la première partie 31 de l'écrou 3 dans le même sens, la partie saillante 19 de cette première partie 31 venant buter contre la partie saillante 20 de la seconde partie 32 de l'acrou retenu en rotation par son doigt 6 contre la glissière 5. Lorsque le doigt 6 dépasse le coude 17, il bascule brusquement dans le décrochement 16 de la glissière, comme représenté à la figure 5 et continue sa course jusqu'à ce qu'il vienne buter contre la butée de fin de course 18, provoquant le blocage en rotation de la vis sans fin et la réaction du dispositif d'arrêt centrifuge 7. Le moteur électrique 2, continuant de tourner un bref instant, en raison du temps de réaction du dispositif d'arrêt 7 et de l'inertie du moteur, imprime une torsion élastique à la vis sans fin 1 qui se trouve ainsi armée à la manière d'un ressort. Lorsque le moteur est arrêté , la vis sans fin 1 se désarme en entraînant violemment le réducteur et le moteur en sens inverse. L'inertie acquise par le moteur provoque à son tour l'entraînement de la vis dans le sens de la flèche F2 d'un angle supérieur à l'angle de torsion. La première partie 31 de l'écrou est entraînée dans ce sens par la vis sans fin 1 (figure 6), mais compte tenu de jeu angulaire de 180° entre les parties 19 et 20 des deux parties de l'écrou, la seconde partie 32 de l'écrou n'est pas entraînée, de telle sorte que le doigt 6 reste dans sa position basculée dans le décrochement 16 et empêche d'ouvrir la porte en agissant directement sur celle-ci étant donné que le doigt 6 vient buter contre le coude 17. Le dispositif reste ainsi verrouillé.

Un accouplement en rotation avec jeu angulaire des deux partie 31 et 32 de l'écrou peut être réalisé de nombreuses autres manières que celle représentée aux figures 7 et 8. Une seconde forme d'exécution de l'écrou est représenté à titre d'exemple aux figures 9 et 10. Dans cette forme d'exécution, la première partie 31' de l'écrou présente deux flasques 21 et 22 reliés entre eux par une partie 23 s'étendant sur environ 30°. Entre ces deux flasques est montée la seconde partie 32' de l'écrou constituée d'un segment de couronne 24 de largeur correspondant à la distance entre les deux flasques 21 et 22 et muni d'un doigt 6' correspondant au doigt 6. Ce segment de couronne 24 est retenu radialement entre les flasques 21 et 22 par les bords de deux tôles arrondies 25 et 26 fixées respectivement autour de chacun des deux flasques 21 et 22 et formant avec ces deux flasques une rainure annulaire de profil en T dans laquelle peut coulisser librement le segment de couronne 24 entre les deux côtés de la partie 23 de la première partie 31' de l'écrou, c'est-à-dire avec un jeu de plus de 180° dans l'exécution représentée.

## Revendications

Dispositif d'actionnement linéaire électromécanique pour porte à déplacement coulissant comprenant un moteur (2) entraînant une vis sans fin (1) sur laquelle est monté un écrou (3) relié à la porte à déplacer et retenu en rotation par une glissière (5) présentant un décrochement (16) à l'endroit correspondant à la fin de course de la porte, ce décrochement autorisant une certaine rotation de l'écrou et constituant une butée (17) empêchant le déplacement en arrière de l'écrou lorsque on agit sur lui par l'intermédiaire de la porte, caractérisé en ce que l'écrou est essentiellement constitué de deux parties (31, 32, 31', 32') solidaires axialement l'une de l'autre, montées rotativement l'une autour de l'autre et conformées de manière à assurer leur solidarisation mutuelle en rotation avec un important jeu angulaire, la partie extérieure (6; 6') de la deuxième partie (32; 32') de l'écrou (3) coopérant avec la glissière (5).

## Patentansprüche

Vorrichtung zur geradlinigen elektromechanischen Betätigung eines Schiebetors, mit einer durch einen Motor (2) angetriebenen Schnecke (1), auf welcher eine Schraubenmutter (3) sitzt, die mit dem zu bewegenden Tor verbunden ist und gegen Drehung durch eine Gleitschiene (5) festgehalten wird, welche an der dem Ende des Verschiebungsweges des Tores entsprechenden Stelle einen Absatz (16) aufweist, wobei dieser Absatz eine gewisse Drehung der Schraubenmutter zulässt und einen Anschlag (17) bildet, der eine Verschiebung der Schraubenmutter nach hinten verhindert, wenn man auf diese vermittels des Tors einwirkt, dadurch gekennzeichnet, dass die Schraubenmutter im wesentlichen aus zwei Teilen (31, 32, 31', 32') besteht, die axial miteinander befestigt, umeinander drehbar montiert und derart ausgebildet sind, dass sie mit einem beträchtlichen Winkel-Spiel drehfest miteinander verbunden sind, wobei der äussere Teil (6; 6') des zweiten Teils (32; 32') der Schraubenmutter (3) mit der Gleitschiene (5) zusammenwirkt.

## Claims

Electromechanical linear drive device for a slidingly movable door, which device comprises a motor (2) driving a worm (1) on which is mounted a nut (3) connected to the door which is to be moved, said nut being secured in respect of rotation by a slide guide (5) having a step (16) at the point corresponding to the end of the stroke of the door, this step allowing a certain rotation of the nut and constituting a stop (17) preventing the rearward displacement of the nut when the latter is acted on by means of the door, characterized in that the nut consists essentially of two parts (31, 32; 31', 32') axially fastened to one another and mounted for rotation one about the other, these parts being so shaped as to ensure that they will be fastened together in respect of rotation with considerable angular play, the outer part (6; 6') of the second part (32; 32') of the nut (3) cooperating with the slide guide (5).

FIG.1

EP 0 248 303 B1

FIG.2

EP 0 248 303 B1

FIG.3

FIG.5

FIG.4

FIG.6

FIG.7

FIG.8

FIG.9

FIG.10